# EUROPEAN PATENT SPECIFICATION

(11) **EP 4 580 305 B1**
(45) Date of publication and mention of the grant of the patent: **07.10.2026**
(21) Application number: 23872380.3
(22) Date of filing: 27.09.2023
(51) Int. Cl.: H04W 76/27, H04W 4/06, H04W 48/06, H04W 76/10

(54) **COMMUNICATION METHOD, BASE STATION, AND USER DEVICE**
KOMMUNIKATIONSVERFAHREN, BASISSTATION UND BENUTZERVORRICHTUNG
PROCÉDÉ DE COMMUNICATION, STATION DE BASE, ET DISPOSITIF TERMINAL

(30) Priority: 28.09.2022 JP 2022155369
(43) Date of publication of application: 02.07.2025
(73) Proprietor: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/035055
(87) International publication number: WO 2024/071158

(56) References cited:
- WO-A1-2022/084537
- WO-A1-2022/084537
- QUALCOMM INCORPORATED: "Enhancements to support Multicast reception by UEs in RRC_INACTIVE state", vol. RAN WG3, no. Online; 20221010 - 20221018, 27 September 2022 (2022-09-27), XP052265477, Retrieved from the Internet <URL:https://ftp.3gpp.org/tsg_ran/WG3_Iu/TSGR3_117bis-e/Docs/R3-225339.zip R3-225339-Enhancements to support Multicast reception by UEs in RRC_INACTIVE state_v1.docx> [retrieved on 20220927]
- QUALCOMM INCORPORATED: "Enhancements to support Multicast reception by UEs in RRC_INACTIVE state", 3GPP TSG RAN WG3 MEETING #117BIS-E R3-225339, 27 September 2022 (2022-09-27), XP052265477
- ERICSSON: "Multicast in Idle and Inactive", 3GPP TSG RAN WG2 MEETING #113-E R2-2101737, 15 January 2021 (2021-01-15), XP051974602

## Description

### TECHNICAL FIELD

The present disclosure relates to a communication method, a base station, and a user terminal used in a mobile communication system.

### BACKGROUND OF INVENTION

The 3rd Generation Partnership Project (3GPP; registered trademark, the same applies below) has defined the technical specifications of New Radio (NR) that is a radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR (for example, see Non-Patent Document 1).

Qualcomm Incorporated, "Enhancements to support Multicast reception by UEs in RRC_INACTIVE state", 3GPP TSG-RAN3 Meeting #117bis-e, R3-225339, 10-18 October 2022, XP052265477, discusses about enhancements to support multicast data reception by UEs in RRC_INACTIVE state and proposals for RAN3 LS reply to SA2 about Multicast data reception in RRC_INACTIVE state.

WO 2022/084537 A1 discloses a method performed by a network node in a telecommunication network providing a multicast transmission to a group of devices residing in a cell of the telecommunication network, the method comprising; monitoring a congestion level for communication, and if the congestion level reaches a first threshold, ordering for at least one device in a radio resource control, RRC, connected mode to be released from the RRC connected mode to an RRC idle mode or an RRC inactive mode, thereby disabling a capability of the at least one device to provide one or more re-transmission requests while keeping an ability of the at least one device to further receive the multicast transmission.

### CITATION LIST

### NON-PATENT LITERATURE

Non-Patent Document 1: 3GPP Technical Specification: TS 38.300 V17.1.0

### SUMMARY

The present invention provides a communication method used in a mobile communication system according to claim 1 and network node used in a mobile communication system according to claim 4. Further embodiments of the present invention are disclosed in the dependent claims.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram for explaining an operation that enables UE in an RRC inactive state to perform multicast reception.
FIG. 7 is a diagram illustrating an operation example of the mobile communication system according to an embodiment.
FIG. 8 is a diagram illustrating a modification of the operation of FIG. 7.
FIG. 9 is a diagram illustrating an operation example of a mobile communication system according to a modification.
FIG. 10 is a diagram illustrating a modification of the operation of FIG. 9.

### DESCRIPTION OF EMBODIMENTS

A mobile communication system according to an embodiment is described with reference to the drawings. In the description of the drawings, the same or similar parts are denoted by the same or similar reference signs.

### System Configuration

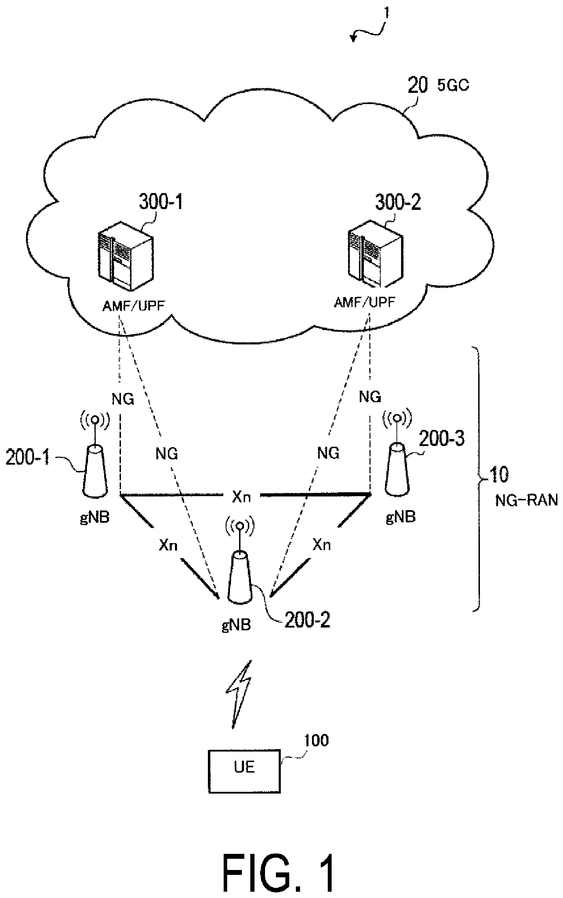

FIG. 1 is a diagram illustrating a configuration of a mobile communication system 1 according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10 (a network 10). The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (vehicle UE), and a flying object or an apparatus provided on a flying object (aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

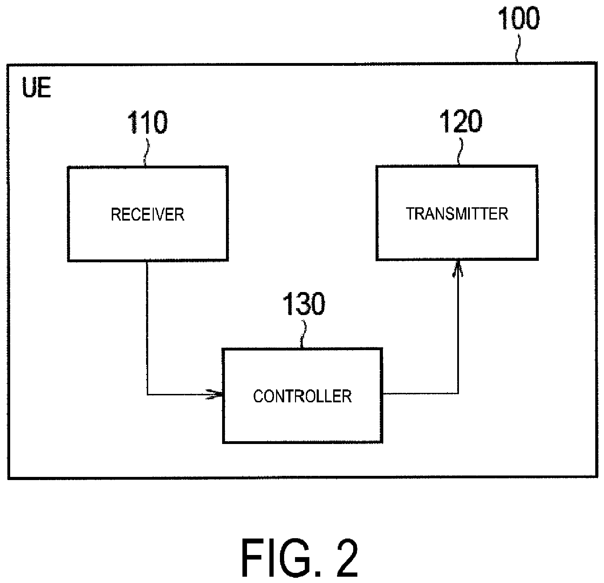

FIG. 2 is a diagram illustrating a configuration of the UE 100 (user equipment) according to an embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The operations of the UE 100 described above and below may also be performed under the control of a controller 230. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

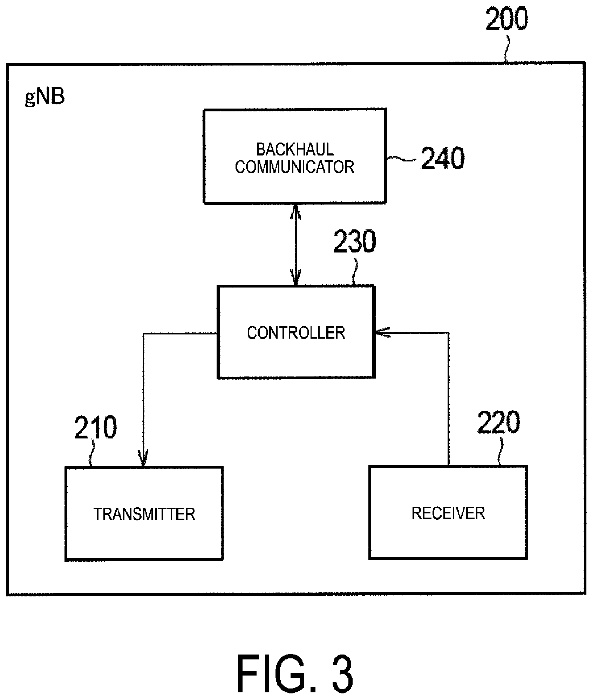

FIG. 3 is a diagram illustrating a configuration of the gNB 200 (base station) according to an embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may also be performed under the control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface between a base station and the core network. Note that the gNB 200 may include a Central Unit (CU) and a Distributed Unit (DU) (i.e., functions are divided), and both units may be connected via an F1 interface that is a fronthaul interface.

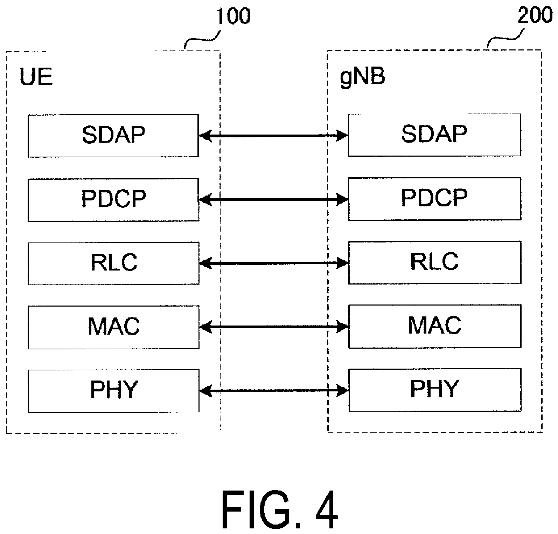

FIG. 4 is a diagram illustrating a configuration of a protocol stack of a radio interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

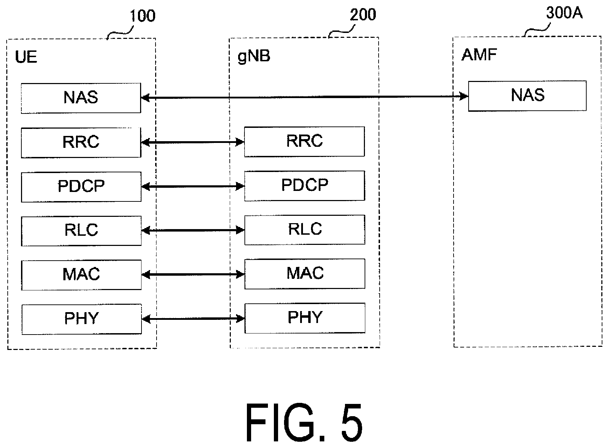

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection is present between the RRC of the UE 100 and the RRC of the gNB 200 (RRC connection), the UE 100 is in an RRC connected state. When no connection is present between the RRC of the UE 100 and the RRC of the gNB 200 (RRC connection), the UE 100 is in an RRC idle state. When the connection between the RRC of the UE 100 and the RRC of the gNB 200 is suspended, the UE 100 is in an RRC inactive state.

The NAS layer that is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### Overview of MBS

The mobile communication system 1 can perform delivery with high resource efficiency by using the multicast/broadcast service (MBS).

In a multicast communication service (also referred to as "MBS multicast"), the same service and the same specific content data are simultaneously provided to a specific UE set. That is, not every UE 100 in the multicast service area is allowed to receive data. The multicast communication services are delivered to the UE 100 using a multicast session, which is a type of MBS session. The UE 100 can receive the multicast communication services in the RRC connected state using mechanisms such as Point-to-Point (PTP) and/or Point-to-Multipoint (PTM) delivery. The UE 100 may receive the multicast communication services in the RRC inactive (or RRC idle) state. Such a delivery mode is also referred to as "delivery mode 1".

In the broadcast communication services (also referred to as "MBS broadcast"), the same service and the same specific content data are provided simultaneously to every UE 100 within a geographic area. That is, every UE 100 in the broadcast service area is allowed to receive the data. The broadcast communication services are delivered to the UE 100 using a broadcast session, which is a type of MBS session. The UE 100 can receive the broadcast communication services in any state of the RRC idle state, the RRC inactive state, and the RRC connected state. Such a delivery mode is also referred to as "delivery mode 2".

Main logical channels used for MBS delivery are a multicast traffic channel (MTCH), a dedicated traffic channel (DTCH), and a multicast control channel (MCCH). The MTCH is a PTM downlink channel for transmitting MBS data of either a multicast session or a broadcast session from the network 10 to the UE 100. The DTCH is a PTP channel for transmitting MBS data of a multicast session from the network 10 to the UE 100. The MCCH is a PTM downlink channel for transmitting MBS broadcast control information associated with one or more MTCHs from the network 10 to the UE 100.

Regarding a configuration in MBS broadcast, the UE 100 in the RRC idle state, the RRC inactive state, or the RRC connected state receives an MBS configuration for a broadcast session (e.g., parameters required for MTCH reception) via the MCCH. Parameters required for reception of the MCCH (MCCH configuration) are provided through system information. In particular, system information block type 20 (SIB 20) includes the MCCH configuration. Note that SIB type 21 (SIB 21) includes information related to service continuity of MBS broadcast reception. The MCCH provides a list of all broadcast services including ongoing sessions transmitted on the MTCH, and the related information of the broadcast sessions includes an MBS session ID (e.g., Temporary Mobile Group Identity (TMGI)), related MTCH scheduling information, and information about neighboring cells providing a specific service on the MTCH.

On the other hand, with respect to MBS multicast, the current technical specifications of the 3GPP enable the UE 100 to receive data of multicast sessions only in RRC connected state. When the UE 100 joining a multicast session is in the RRC connected state and the multicast session is activated, the gNB 200 transmits an RRC reconfiguration message including an MBS configuration related to the multicast session to the UE 100. Such an MBS configuration is also referred to as a multicast radio bearer (MRB) configuration, an MTCH configuration, or a multicast configuration. Such an MRB configuration (MRB-ToAddMod) includes an MBS session ID (mbs-SessionId), an MRB ID (mrb-Identity), and other parameters such as a PDCP configuration (pdcp-Config) for an MRB (multicast MRB) to be configured for the UE 100.

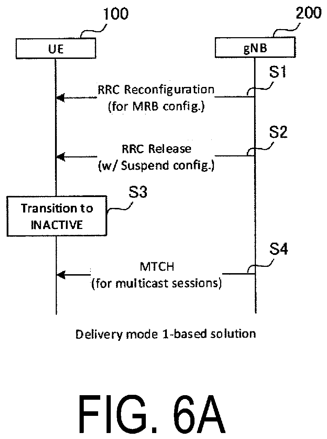

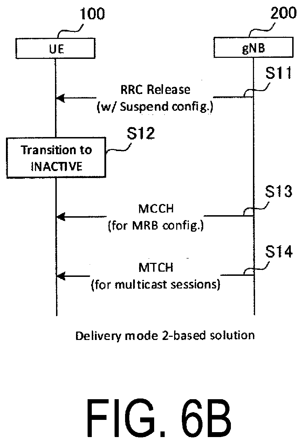

In the following embodiment, an operation of enabling the UE 100 in the RRC inactive state to perform multicast reception will be mainly described. FIG. 6 illustrates an overview of the operation.

As a solution for the UE 100 in the RRC inactive state to perform multicast reception, a solution based on the delivery mode 1 shown in FIG. 6(a) and a solution based on the delivery mode 2 shown in FIG. 6(b) are considered.

In the solution based on the delivery mode 1 shown in FIG. 6(a), in step S1, the gNB 200 transmits an RRC Reconfiguration message including the MBS configuration (multicast configuration) related to multicast sessions to the UE 100 in the RRC connected state. The UE 100 receives the multicast data on the MTCH via the multicast sessions (multicast MRB) based on the multicast configuration received in the RRC Reconfiguration message.

In step S2, the gNB 200 transmits an RRC release (Release) message for causing the UE 100 to transition to the RRC inactive state to the UE 100 in the RRC connected state. The RRC Release message includes a configuration (Suspend Config.) for the RRC inactive state.

In step S3, the UE 100 transitions from the RRC connected state to the RRC inactive (INACTIVE) state in response to receiving the RRC Release message in step S2.

In step S4, the UE 100 in the RRC inactive state continues using the multicast configuration of step S1 to receive the multicast data on the MTCH through the multicast sessions.

This enables the UE 100 in the RRC inactive state to perform multicast reception. Note that, although an example in which multicast configuration is performed using an RRC Reconfiguration message has been described, multicast configuration may be performed using an RRC Release message.

Both the RRC Reconfiguration message and the RRC Release message are RRC messages transmitted per UE on the dedicated control channel (DCCH), and are hereinafter also referred to as dedicated RRC messages.

On the other hand, in the solution based on the delivery mode 2 shown in FIG. 6(b), in step S11, the gNB 200 transmits an RRC Release message for causing the UE 100 to transition to the RRC inactive state to the UE 100 in the RRC connected state. The RRC Release message includes a configuration (Suspend Config.) for the RRC inactive state.

In step S12, the UE 100 transitions to the RRC inactive (INACTIVE) state in response to receiving the RRC Release message in step S11.

In step S13, the gNB 200 transmits the MCCH including the MBS configuration (multicast configuration) for the multicast sessions. The UE 100 receives the MCCH. Note that the UE 100 receives the SIB 20 prior to the reception of the MCCH, and receives the MCCH based on the SIB 20. Note that the MCCH transmission (and reception) may be performed before step S11 or may be performed simultaneously with step S11.

In step S14, the UE 100 in the RRC inactive state receives the multicast data on the MTCH via the multicast sessions based on the multicast configuration received on the MCCH in step S13. This enables the UE 100 in the RRC inactive state to perform multicast reception.

### System Operation Example

When the UE 100 performs multicast reception from the gNB 200 in the RRC inactive state, the load on the network (in particular, the gNB 200) and the power consumption of the UE 100 can be reduced, compared to when the UE 100 performs multicast reception from the gNB 200 in the RRC connected state. For this reason, from the viewpoint of efficiency, that the gNB 200 causes the UE 100 in the RRC connected state that can perform multicast reception in the RRC inactive state to transition to the RRC inactive state is preferable.

However, among UEs 100 that perform multicast reception, a UE 100 that performs a group call application such as Push to Talk (PTT) is also present. Such a UE 100 may perform uplink (UL) transmission of a multicast session while performing multicast reception of a multicast session on downlink (DL). If such a UE 100 is caused to transition to the RRC inactive state, the UE 100 needs to transition to the RRC connected state every time the UE 100 performs UL transmission, which is rather inefficient. If the gNB 200 can ascertain the traffic characteristics of the multicast session, the gNB 200 can appropriately determine whether to transition the UE 100 to the RRC inactive state, but since the gNB 200 does not have an application layer, it is difficult for the gNB 200 to make such an appropriate determination alone.

In the embodiment, the gNB 200 is enabled to appropriately determine whether to cause the UE 100 that performs multicast reception in the RRC connected state to transition to the RRC inactive state, and to realize efficient multicast reception.

To be more specific, in the embodiment, the gNB 200, which transmits multicast data to a UE 100 in an RRC connected state via a multicast session, receives notification information for determining whether to cause the UE 100 to perform reception of the multicast session in an RRC inactive state from another apparatus that is at least one of the UE 100 or a core network apparatus. In the embodiment, although an example in which the core network apparatus is an AMF 300A will be described, the core network apparatus may be a UPF or the like. Based on the notification information, the gNB 200 determines whether to cause the UE 100 to transition from the RRC connected state to the RRC inactive state. The notification information may be information based on a UL traffic characteristics parameter of the multicast session. For example, when there is no UL transmission or the frequency of UL transmission is low, the UE 100 does not need to frequently transition to the RRC connected state even if the UE 100 tries to receive the multicast session in the RRC inactive state, and thus the gNB 200 determines to cause the UE 100 to transition to the RRC inactive state.

In an embodiment, the UE 100 or AMF 300A specifies the UL traffic characteristics parameters of the multicast session. The UE 100 or the AMF 300A transmits information indicating whether the UE 100 can perform reception of the multicast session in the RRC inactive state to the gNB 200 as notification information based on the UL traffic characteristics parameters.

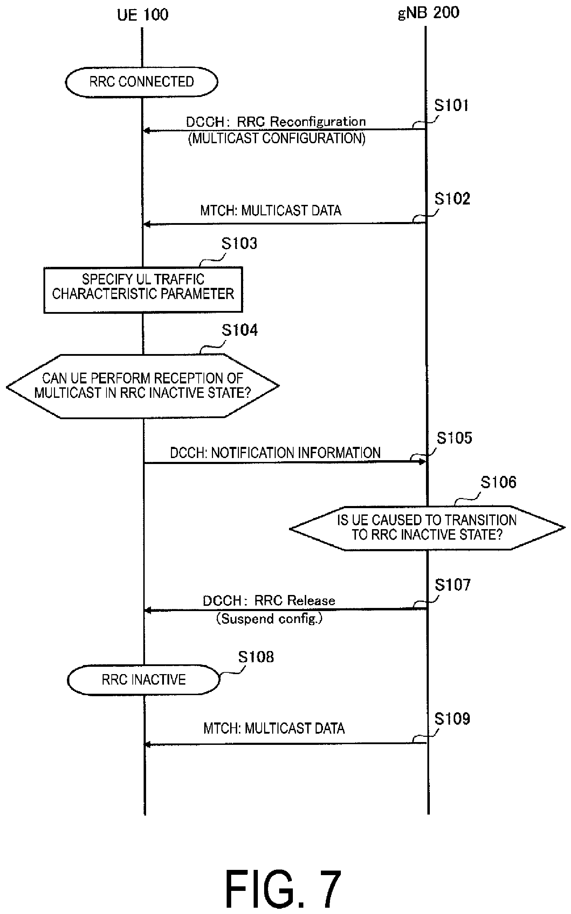

FIG. 7 is a diagram illustrating an operation example of the mobile communication system 1 according to the embodiment. Prior to the present operation, it is assumed that the UE 100 has joined a multicast session. It is assumed that the UE 100 is performing or will perform multicast reception in the RRC connected state.

In step S101, the gNB 200 transmits a multicast configuration necessary for reception of a multicast session (that is, multicast reception) to the UE 100 in the RRC connected state in a dedicated RRC message (in the illustrated example, an RRC Reconfiguration message). The UE 100 receives the multicast configuration in the dedicated RRC message. Such a configuration may include a configuration for allowing or requesting the UE 100 to transmit notification information described below.

In step S102, the gNB 200 transmits the multicast data on the MTCH through the multicast session based on the multicast configuration of step S101. The UE 100 receives the multicast data on the MTCH through the multicast session based on the multicast configuration of step S201.

In step S103, the UE 100 specifies a UL traffic characteristics parameter for the multicast session. The UL traffic characteristics parameter includes at least one selected from the group consisting of a parameter indicating the presence or absence of UL transmission of the multicast session, a parameter indicating the occurrence probability per unit time or the occurrence frequency of UL transmission of the multicast session, an allowable delay parameter of UL transmission of the multicast session, and a parameter indicating an uplink transmission data size of the multicast session.

In step S104, the UE 100 determines whether multicast reception can be performed in the RRC inactive state based on the UL traffic characteristics parameter specified in step S103. The UE 100 may determine that the UE 100 can perform the multicast reception in the RRC inactive state when one or a combination of two or more of the following conditions (a) to (d) is satisfied, for example.
(a) No UL transmission is present or no UL transmission is expected in a certain period of time in the future:
   For example, when the service type (application type) of the multicast session is a service without UL transmission (for example, a television broadcasting service) or when the service type is of a service with UL transmission but UL transmission is not performed for a certain time period (for example, 10 seconds) (for example, the microphone is turned off in a group call), the UE 100 may determine that the UE 100 can perform multicast reception in the RRC inactive state. The certain time period may be configured for the UE 100 from the gNB 200 or the AMF 300A. The UE 100 may monitor the occurrence status of UL traffic in the multicast session and make the determination by prediction based on the monitoring result.
(b) The frequency of UL transmission is low:
   For example, when the service type (application type) of the multicast session is of a service in which UL transmission is rarely performed, the UE 100 may determine that the UE 100 can perform multicast reception in the RRC inactive state. The frequency may be configured for the UE 100 from the gNB 200 or the AMF 300A. The UE 100 may monitor the frequency of occurrence of UL traffic in the multicast session and make the determination by prediction based on the monitoring result.
(c) Delay of UL transmission is allowed:
   For example, when the service type (application type) of the multicast session is of a service that does not require an UL real-time response (text transmission or the like), the UE 100 may determine that the UE 100 can perform multicast reception in the RRC inactive state. The threshold value (reference value) of the delay may be configured for the UE 100 from the gNB 200 or the AMF 300A.
(d) The size of UL transmission data is small:
   For example, when the service type (application type) of the multicast session is of a service in which only small-data size transmission such as the degree of Ack and/or a short text message is performed on UL (for example, only text message on UL in video live distribution or only Ack transmission in an upper layer retransmission function such as FLUTE in firmware downloading), the UE 100 may determine that the UE 100 can perform multicast reception in the RRC inactive state. The UE 100 may monitor the occurrence status of UL traffic in the multicast session and make the determination by prediction based on the monitoring result. The threshold value for determining that the data size is small may be configured for the UE 100 from the gNB 200 or the AMF 300A. Note that, in such a case, the UE 100 may perform UL transmission without transitioning to the RRC connected state using a small data transmission (SDT) technique for performing UL transmission during a random access procedure. That is, the threshold value may be the same as the data amount threshold value of SDT.

In step S105, the UE 100 transmits an RRC message including notification information indicating the determination result of step S104 to the gNB 200. The UE 100 may transmit an RRC message including the notification information indicating the determination result to the gNB 200 based on the determination of step S104 that the UE 100 can perform multicast reception in the RRC inactive state. The gNB 200 receives the RRC message. That is, the UE 100 may notify the gNB 200 that the UE 100 can receive the multicast session in the RRC inactive state. The RRC message may include MBS session information associated with the notification information. The MBS session information is information for identifying the multicast session (multicast service), which is, for example, a TMGI.

The RRC message may be a UE Assistance Information message. "preferredRRC-State" in "ReleasePreference" in the UE Assistance Information message indicates an RRC state desired by the UE 100. The UE 100 sets "inactive" for "preferredRRC-State". In the embodiment, the UE Assistance Information message may be able to include additional information indicating that multicast reception will be continued. The UE 100 may transmit a UE Assistance Information message including a set of the "preferredRRC-State" set to "inactive" and the additional information as notification information indicating that the multicast session can be received in the RRC inactive state.

The RRC message may be an MBS Interest Indication message. In current technical specifications, the MBS Interest Indication message includes an MBS-ServiceList (in particular, a list of TMGIs), which is a list of MBS broadcast services that the UE 100 is receiving or wishes to receive. In the embodiment, the MBS-ServiceList may be a list of MBS broadcast services and MBS multicast services that the UE 100 is receiving or wishes to receive. The UE Assistance Information message may be able to include additional information indicating that multicast reception will be continued in association with the TMGI of the MBS multicast service. The MBS Interest Indication message may be able to include, as a new information element, a TMGI indicating a multicast session that can be received in the RRC inactive state.

In step S106, the gNB 200 determines whether to cause the UE 100 to transition to the RRC inactive state based on the notification information received in step S105. Here, description will continue on the assumption that it has been determined that the UE 100 is caused to transition to the RRC inactive state.

In step S107, the gNB 200 transmits the RRC Release message including Suspend config. to the UE 100. The UE 100 receives the RRC Release message. The RRC Release message may include a multicast configuration required for reception of the multicast session.

In step S108, the UE 100 transitions to the RRC inactive state from the RRC connected state upon reception of the RRC Release message in step S107.

In step S109, the UE 100 having transitioned to the RRC inactive state receives the multicast data on the MTCH via the multicast session based on the multicast configuration configured in step S101 or S107. The UE 100 may receive the multicast data on the MTCH through the multicast session based on the multicast configuration transmitted on the MCCH from the gNB 200.

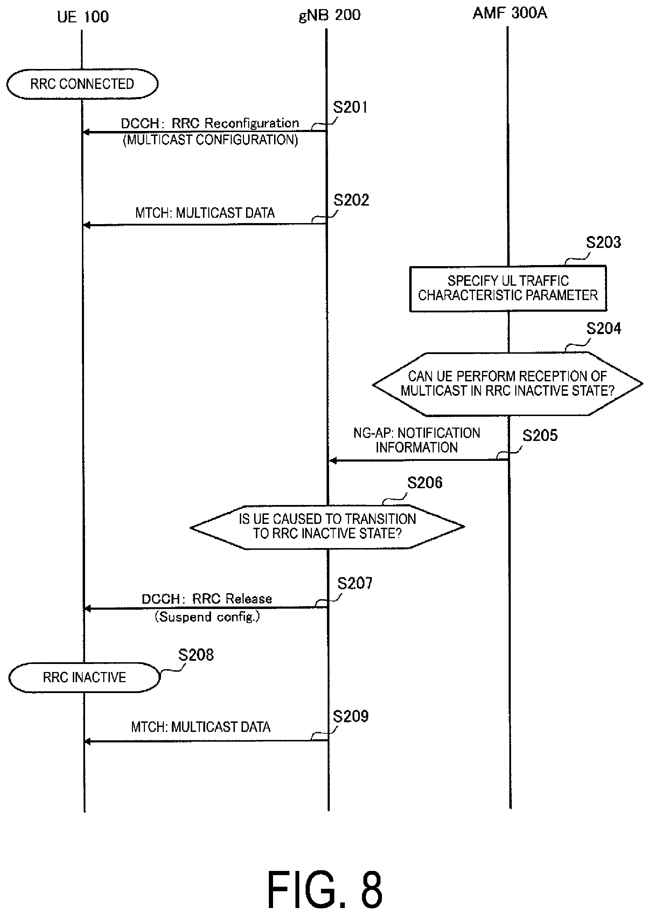

Although an example in which the UE 100 transmits the notification information to the gNB 200 is shown in the operation example of FIG. 7, the AMF 300A may transmit the notification information to the gNB 200. FIG. 8 is a flowchart showing a modification of the operation of FIG. 7. Here, differences from the operation of FIG. 7 will be described, and overlapping description will be omitted.

Steps S201 and S202 are the same as or similar to those of the operation of FIG. 7.

In Step S203, the AMF 300A specifies a UL traffic characteristics parameter of the multicast session.

In step S204, the AMF 300A determines whether the UE 100 can perform multicast reception in the RRC inactive state based on the UL traffic characteristics parameter determined in step S203. The determination method is the same as or similar to the above-described method.

In step S205, the AMF 300A transmits an NG-Application Protocol (AP) message including the notification information indicating the determination result of step S204 to the gNB 200 on the NG interface. The message may include MBS session information associated with the notification information. The message may be an INITIAL CONTEXT SETUP REQUEST message or a UE CONTEXT MODIFICATION REQUEST message.

In step S206, the gNB 200 determines whether to cause the UE 100 to transition to the RRC inactive state based on the notification information received in step S205. The subsequent operation (steps S207 to S209) is the same as or similar to the operation of FIG. 7.

### Modification of Operation

In the present modification, the UE 100 or the AMF 300A specifies a UL traffic characteristics parameter of a multicast session and transmits the UL traffic characteristics parameter to the gNB 200 as notification information. That is, in the present modification, more detailed information (material for determination) than that in the above-described embodiment is given to the gNB 200 as notification information. Differences from the operation of the above-described embodiment will be described below, and overlapping description will be omitted.

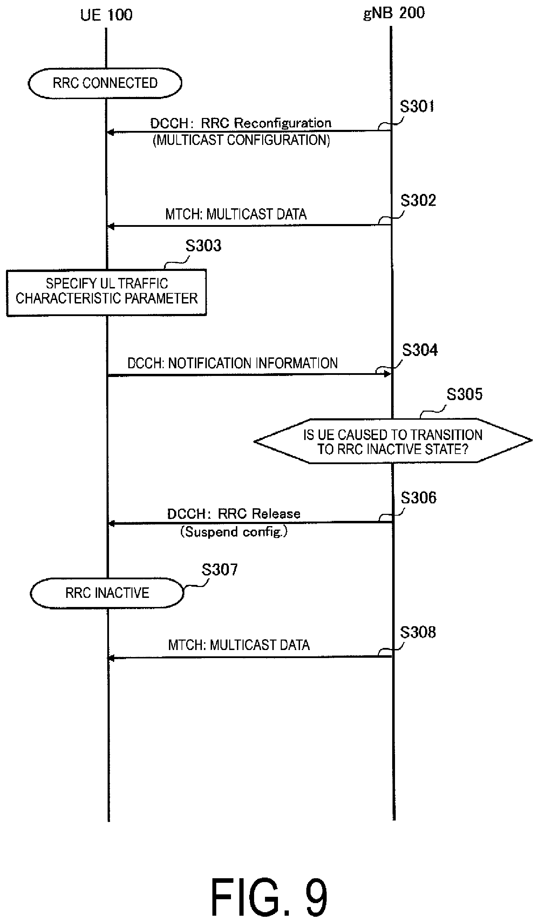

FIG. 9 is a flowchart showing an operation example of the mobile communication system 1 according to the present modification.

Steps S301 and S302 are the same as or similar to those of the embodiment described above.

In step S303, the UE 100 specifies a UL traffic characteristics parameter of the multicast session. The UL traffic characteristics parameter includes at least one selected from the group consisting of a parameter indicating the presence or absence of UL transmission of the multicast session, a parameter indicating the occurrence probability per unit time or the occurrence frequency of UL transmission of the multicast session, an allowable delay parameter of UL transmission of the multicast session, and a parameter indicating an uplink transmission data size of the multicast session.

In step S304, the UE 100 transmits an RRC message including the UL traffic characteristics parameter specified in step S303 as notification information to the gNB 200. The RRC message may include MBS session information associated with the notification information. As described above, the RRC message may be a UE Assistance Information message or an MBS Interest Indication message.

In step S305, the gNB 200 determines whether to cause the UE 100 to transition to the RRC inactive state based on the notification information received in step S304. The subsequent operations (step S306 to step S308) are the same as or similar to those of the embodiment described above.

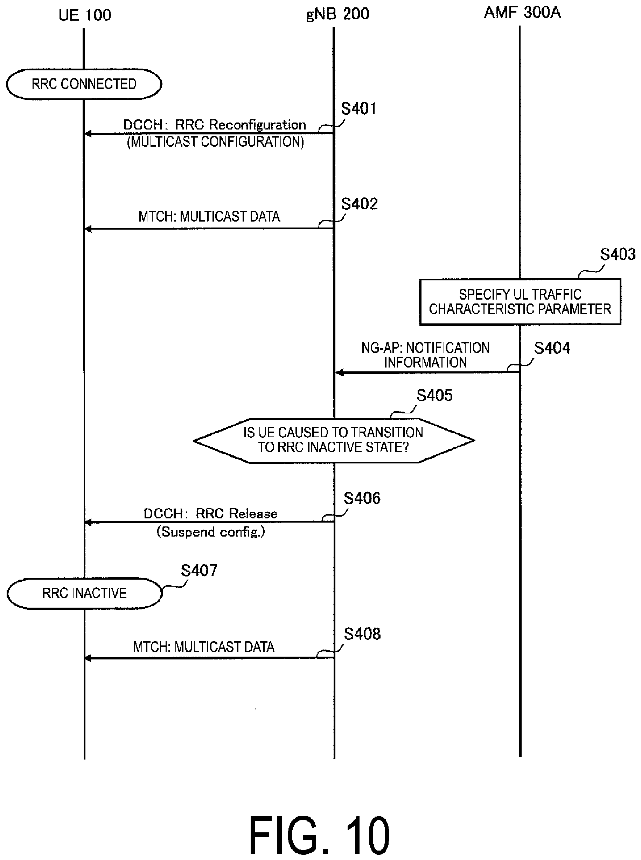

Although an example in which the UE 100 transmits the notification information to the gNB 200 is shown in the operation example of FIG. 9, the AMF 300A may transmit the notification information to the gNB 200. FIG. 10 is a flowchart showing a modification of the operation of FIG. 9.

Steps S401 and S402 are the same as or similar to those of the operation of FIG. 9.

In step S403, the AMF 300A specifies a UL traffic characteristics parameter of the multicast session.

In step S404, the AMF 300A transmits an NG-Application Protocol (AP) message including the UL traffic characteristics parameter specified in step S403 as notification information to the gNB 200 on the NG interface. The message may include MBS session information associated with the notification information.

In step S405, the gNB 200 determines whether to cause the UE 100 to transition to the RRC inactive state based on the notification information received in step S404. The subsequent operations (step S406 to step S408) are the same as or similar to the operation of FIG. 9.

### Other Embodiment

Although the multicast reception in the RRC inactive state has been mainly described in the above-described embodiments, the operations according to the above-described embodiments may be applied to multicast reception in the RRC idle state. That is, the "RRC inactive state" in the operations according to the above-described embodiments and their modification may be read as "RRC idle state". With respect to the RRC idle state, RRC recovery (Resume) can be read as RRC establishment (Establishment).

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a mobile termination (MT) of the IAB node.

Although the term "network node" mainly refers to a base station, it may also refer to an apparatus of a core network or a part (CU, DU or RU) of a base station.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the scope of the present invention as defined by the claims.

This application claims priority to Japanese Patent Application No. 2022-155369 (filed on September 28, 2022).

### REFERENCE SIGNS

1: Mobile communication system
10: RAN
20: CN
100: User equipment (UE)
110: Receiver
120: Transmitter
130: Controller
200: gNB (Base station)
210: Transmitter
220: Receiver
230: Controller
240: Backhaul communicator
300A: AMF

## Claims

1. A communication method used in a mobile communication system (1) configured to provide a multicast/broadcast service, MBS, the communication method comprising the steps of:
transmitting, by a network node (200), multicast data to a user equipment (100) via a multicast session, the user equipment (100) being in a radio resource control, RRC, connected state;
determining, by the network node (200), whether to cause the user equipment (100) to perform reception of the multicast session in an RRC inactive state; and
deciding, by the network node (200), whether to cause the user equipment (100) to transition from the RRC connected state to the RRC inactive state, based on the determining,
wherein the determining comprises determining, by the network node (200), whether to cause a single user equipment (100) to perform reception of the multicast session in the RRC inactive state, based on notification information provided from a core network apparatus,
the notification information comprises information related to frequency of uplink transmission from the single user equipment (100) to the network node (200).

2. The communication method according to claim 1, wherein the notification information comprises information indicating whether the single user equipment (100) is configured to perform reception of the multicast session in the RRC inactive state.

3. The communication method according to claim 1, wherein the determining comprises determining, by the network node (200), whether to cause the single user equipment (100) to perform reception of the multicast session in the RRC inactive state, based on allowable delay of the multicast session provided from a core network apparatus.

4. A network node (200) used in a mobile communication system (1) configured to provide a multicast/broadcast service, MBS, the network node (200) comprising:
a transmitter circuitry, transmitting, multicast data, via a multicast session, to a user equipment (100) in a radio resource control, RRC, connected state; and
a controller circuitry, determining, whether to cause the user equipment (100) to perform reception of the multicast session in an RRC inactive state,
wherein the controller circuitry is configured to decide whether to cause the user equipment (100) to transition from the RRC connected state to the RRC inactive state, based on the determining, and
the determining comprises determining, by the controller circuitry, whether to cause a single user equipment (100) to perform reception of the multicast session in the RRC inactive state, based on notification information provided from a core network apparatus,
the notification information comprises information related to frequency of uplink transmission from the single user equipment (100) to the network node (200).

## Patentansprüche

1. Kommunikationsverfahren, das in einem Mobilkommunikationssystem (1) verwendet wird, das konfiguriert ist, um einen Multicast-/Broadcast-Dienst, MBS, bereitzustellen, wobei das Kommunikationsverfahren die folgenden Schritte aufweist:
Senden, durch einen Netzwerkknoten (200), von Multicast-Daten an eine Benutzereinrichtung (100) über eine Multicast-Sitzung, wobei die Benutzereinrichtung (100) in einem Funkressourcensteuerung-, RRC-, Verbindungszustand ist,
Ermitteln, durch den Netzwerkknoten (200), ob die Benutzereinrichtung (100) veranlasst werden soll, den Empfang der Multicast-Sitzung in einem RRC-inaktiven Zustand durchzuführen, und
Entscheiden, durch den Netzwerkknoten (200), ob die Benutzereinrichtung (100) basierend auf dem Ermitteln veranlasst werden soll, vom RRC-Verbindungszustand in den RRC-inaktiven Zustand überzugehen,
wobei das Ermitteln aufweist: Ermitteln, durch den Netzwerkknoten (200), ob eine einzelne Benutzereinrichtung (100) veranlasst werden soll, den Empfang der Multicast-Sitzung im RRC-inaktiven Zustand durchzuführen, basierend auf Benachrichtigungsinformationen, die von einer Kernnetzwerkvorrichtung bereitgestellt werden,
wobei die Benachrichtigungsinformationen Informationen bezüglich einer Frequenz einer Uplink-Übertragung von der einzelnen Benutzereinrichtung (100) an den Netzwerkknoten (200) aufweisen.

2. Kommunikationsverfahren gemäß Anspruch 1, wobei die Benachrichtigungsinformationen Informationen aufweisen, die angeben, ob die einzelne Benutzereinrichtung (100) konfiguriert ist, um den Empfang der Multicast-Sitzung im RRC-inaktiven Zustand durchzuführen.

3. Kommunikationsverfahren gemäß Anspruch 1, wobei das Ermitteln aufweist: Ermitteln, durch den Netzwerkknoten (200), ob die einzelne Benutzereinrichtung (100) veranlasst werden soll, den Empfang der Multicast-Sitzung im RRC-inaktiven Zustand durchzuführen, basierend auf einer zulässigen Verzögerung der Multicast-Sitzung, die von einer Kernnetzwerkvorrichtung bereitgestellt wird.

4. Netzwerkknoten (200), der in einem Mobilkommunikationssystem (1) verwendet wird, das konfiguriert ist, um einen Multicast-/Broadcast-Dienst, MBS, bereitzustellen, wobei der Netzwerkknoten (200) aufweist:
eine Senderschaltung, die Multicast-Daten über eine Multicast-Sitzung an eine Benutzereinrichtung (100) in einem Funkressourcensteuerungs-, RRC-, Verbindungszustand übermittelt, und
eine Controllerschaltung, die ermittelt, ob die Benutzereinrichtung (100) veranlasst werden soll, den Empfang der Multicast-Sitzung in einem RRC-inaktiven Zustand durchzuführen,
wobei die Controllerschaltung konfiguriert ist, um zu entscheiden, ob die Benutzereinrichtung (100) basierend auf dem Ermitteln veranlasst werden soll, von dem RRC-Verbindungszustand in den RRC-inaktiven Zustand überzugehen, und
das Ermitteln aufweist: Ermitteln, durch die Controllerschaltung, ob eine einzelne Benutzereinrichtung (100) veranlasst werden soll, den Empfang der Multicast-Sitzung im RRC-inaktiven Zustand durchzuführen, basierend auf von einer Kernnetzwerkvorrichtung bereitgestellten Benachrichtigungsinformationen,
wobei die Benachrichtigungsinformationen Informationen bezüglich einer Frequenz einer Uplink-Übertragung von der einzelnen Benutzereinrichtung (100) an den Netzwerkknoten (200) aufweisen.

## Revendications

1. Procédé de communication utilisé dans un système de communication mobile (1) configuré pour fournir un service de multidiffusion/diffusion, MBS, le procédé de communication comprenant les étapes consistant à :
transmettre, par un nœud de réseau (200), des données de multidiffusion à un équipement utilisateur (100) via une session de multidiffusion, l'équipement utilisateur (100) se trouvant dans un état connecté de contrôle de ressources radio, RRC ;
déterminer, par le nœud de réseau (200), s'il convient de faire en sorte que l'équipement utilisateur (100) effectue la réception de la session de multidiffusion dans un état RRC inactif ; et
décider, par le nœud de réseau (200), s'il convient de faire en sorte que l'équipement utilisateur (100) passe de l'état RRC connecté à l'état RRC inactif, sur la base de ladite détermination,
dans lequel ladite détermination comprend la détermination, par le nœud de réseau (200), s'il convient de faire en sorte qu'un équipement utilisateur unique (100) effectue la réception de la session de multidiffusion dans l'état RRC inactif, sur la base d'informations de notification fournies depuis un dispositif de réseau central,
les informations de notification comprenant des informations relatives à une fréquence de transmission en liaison montante depuis l'équipement utilisateur unique (100) vers le nœud de réseau (200).

2. Procédé de communication selon la revendication 1, dans lequel les informations de notification comprennent des informations indiquant si l'équipement utilisateur unique (100) est configuré pour effectuer la réception de la session de multidiffusion dans l'état inactif RRC.

3. Procédé de communication selon la revendication 1, dans lequel la détermination comprend la détermination, par le nœud de réseau (200), s'il convient de faire en sorte que l'équipement utilisateur unique (100) effectue la réception de la session de multidiffusion dans l'état inactif RRC, sur la base d'un délai admissible de la session de multidiffusion fourni par un dispositif de réseau central.

4. Nœud de réseau (200) utilisé dans un système de communication mobile (1) configuré pour fournir un service de multidiffusion/diffusion, MBS, le nœud de réseau (200) comprenant :
un circuit transmetteur, transmettant des données de multidiffusion via une session de multidiffusion à un équipement utilisateur (100) dans un état connecté de contrôle de ressources radio, RRC ; et
un circuit de contrôleur, déterminant s'il convient de faire en sorte que l'équipement utilisateur (100) effectue la réception de la session de multidiffusion dans un état RRC inactif,
dans lequel le circuit de contrôleur est configuré pour décider s'il convient de faire en sorte que l'équipement utilisateur (100) passe de l'état RRC connecté à l'état RRC inactif, sur la base de ladite détermination, et
la détermination comprend la détermination, par le circuit de contrôleur, s'il convient de faire en sorte qu'un équipement utilisateur unique (100) effectue la réception de la session de multidiffusion dans l'état RRC inactif, sur la base d'informations de notification fournies depuis un dispositif de réseau central,
les informations de notification comprenant des informations relatives à une fréquence de transmission en liaison montante depuis l'équipement utilisateur unique (100) vers le nœud de réseau (200).
